# EUROPEAN PATENT SPECIFICATION

(11) **EP 1 101 997 B1**
(45) Date of publication and mention of the grant of the patent: **24.10.2001**
(21) Application number: 99309190.9
(22) Date of filing: 18.11.1999
(51) Int. Cl.: F16L 27/11, F16L 51/02, F01N 7/18, F02B 33/44

(54) **Flexible pipe having fine mesh braid liner**
Flexibles Rohr mit feinmaschig geflochtener Auskleidung
Tuyau flexible à revêtement interne tressé à mailles fines

(43) Date of publication of application: 23.05.2001
(73) Proprietor: Senior Flexonics Automotive Limited, Crumlin, Gwent NP11 3HY (GB)
(72) Inventor: Challis, Ray, Cisvane, Cardiff, South Wales (GB)
(74) Representative: Franks, Robert Benjamin

(56) References cited:
- EP-A- 0 789 137
- EP-A- 0 860 590
- WO-A-99/37898
- US-A- 4 697 423
- US-A- 5 905 233

## Description

### Field of the Invention

The present invention relates to tubes for fluid transfer, and particularly, although not exclusively, to a tube for transferring gas between a gas charging device such as a turbocharger or a supercharger and an inlet manifold of an internal combustion engine.

### Background to the Invention

It is known in the prior art to use gas charging devices such as turbochargers and superchargers to increase the pressure of air entering an inlet manifold of an internal combustion engine. This process of increasing the pressure of inlet air is known as charging. Such superchargers or turbochargers increase the mass of air drawn into an internal combustion engine per unit time by raising the intake pressure. A prior art turbo charger consists of a centrifugal compressor where exhaust gases taken from an exhaust manifold on an associated internal combustion engine drive an exhaust gas turbine which drives the compressor. Known superchargers comprise a centrifugal compressor driven mechanically by an associated internal combustion engine. The mechanical drive connection to the compressor may be for instance via a belt drive taken off a drive wheel on the engine.

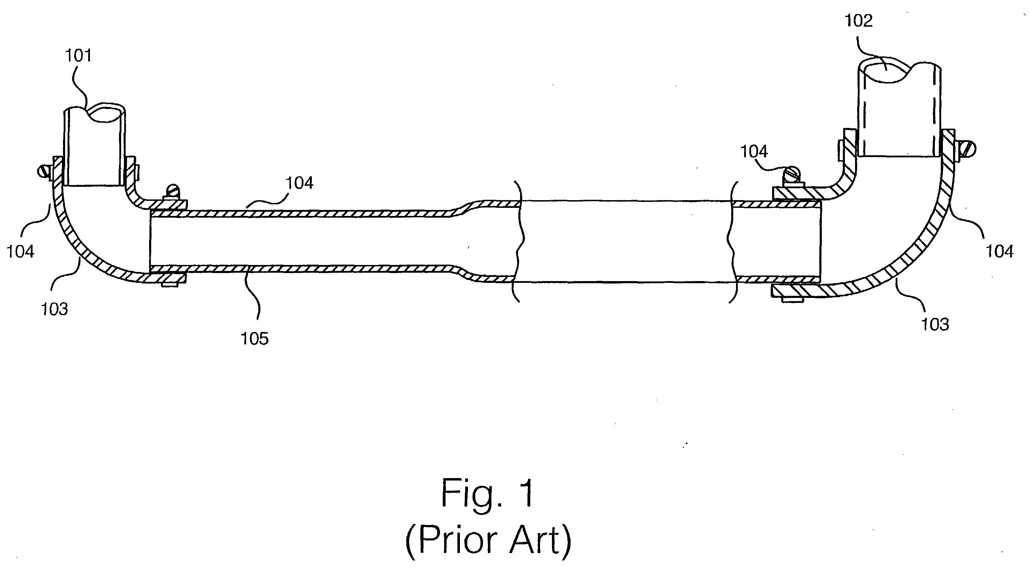

To transfer charged gases between a turbocharger or supercharger and an inlet manifold of an internal combustion engine, it is known in the prior art to use charged air ducts. Prior art charged air ducts are of two general types. A first type of prior art charged air duct comprises a metal tube connected by flexible rubber couplings as shown in Fig. 1 herein. The first type of charged air duct may incorporate a swaged tube, having a first end being attached to an outlet manifold tube 102 from a suitable charging device eg a turbocharger or supercharger, and a second end for attachment to an inlet manifold tube 101 of an engine, for inlet of gases for combustion. The metal tube is fixed at first and second ends by use of rubber coupling hoses 103 and a suitable fixing eg a circular hose clip 104 as illustrated in Fig. 1. Such couplings may be attached to the metal tubes at both a first end and a second end of said coupling by the appropriate clamping arrangement eg the hose clips 104. The flexible rubber couplings 103 provide for absorption of vibration produced by operation of the internal combustion engine and may accommodate some thermal expansion.

By use of the three tubes; the first coupling tube 103; the intermediate swaged metal tube 105; and the second coupling tube 103 wherein said intermediate tube 105 connects the two rubber couplings 103, one of each of said two rubber couplings being connected to either the inlet manifold tube 102 or the outlet manifold tube 101, the charged air duct may form a continuous duct passage having two single bends to connect the outlet manifold 102 of the charging device with the inlet manifold 101 of the associated internal combustion engine.

Bench tests show that there are improvements to the performance of internal combustion engines by making a reduction in the cross-sectional area of an internal passage of a charged air duct between the outlet manifold and inlet manifold. Hence, in the first type of prior art charged air duct a reduction in cross-sectional area of the passage at the inlet end compared to the outlet end may be achieved by using a successively narrower tube 105 having a decreased cross-sectional area at one end.

The intermediate tube 105 of the first prior art charged air duct is manufactured by a process called hydro-forming. In this process water pressure is used to form the tube 105 into a required tapering shape in which a cross-sectional area of an internal passage of the charged air duct decreases towards a second end of the duct.

A second type of prior art charged air duct comprises a single metal tube, having first and second ends designed to connect to an outlet manifold of a gas charging device eg turbocharger or supercharger and to an inlet manifold on an internal combustion engine respectively. The first and second ends are commonly connected to the outlet manifold and inlet manifold respectively using rubber boot connectors which may be fastened to the ends by an appropriate clamping arrangement or other fastening means eg a circular hose clip. In order to obtain the reduction in internal passage cross-sectional area between the first and second ends of such a prior art charged air duct, the single piece metal tube is cast to have an increasingly thicker wall towards the second end of the duct and hence having a decreased cross-sectional area towards the second end of the duct.

In both the types of prior art charged air duct described above, rubber couplings or connectors are used. These may be used either to connect individual tubes within a charged air duct (as in the first type prior art charged air duct) or to connect first and seconds of the charged air duct to an outlet manifold of a gas charging device and an inlet manifold on the engine block of an internal combustion engine as in the second type. These rubber connectors and couplings are required to withstand high temperatures, in the region of 150+ °C. As a result, such connectors are commonly manufactured from silicon rubber perhaps with a fluorocarbon liner, and are therefore expensive. A current trend towards more stringent engine calibrations is commonly leading to increased engine temperatures and an increasing trend towards small cars means that the available packaging space of an internal combustion engine is often being decreased. Decreasing the packaging space of an internal combustion engine means that connecting pipes such as charged air ducts are commonly closer to the engine block and hence subject to higher temperatures. This progressive increase in trend towards engine bay temperature means that rubber connectors may not continue to be appropriate for use in many engine bay applications, including those described above.

The document EP-A-0 789 137 discloses a charged gas duct according to the preamble of claim 1.

### Summary of the Invention

One object of the present invention is to provide a charged air duct for an internal combustion engine comprising a single piece component which is easily installed.

A second object of the present invention is to provide a charged air duct where the cross-sectional area of said charged air duct available for gas-flow into an inlet manifold of an associated internal combustion engine from a second end of said charged air duct is easily adjustable for tuning during a development cycle of an engine, without the need for major tooling or equipment changes.

A third object of the present invention is to provide for a reduction in the cost of manufacture of charged air ducts for transferring gas from a charging device e.g. a turbocharger or supercharger associated with an internal combustion engine to an inlet manifold of said engine.

According to a first aspect of the present invention, there is provided a charged gas duct for an internal combustion engine comprising a tube, said tube comprising a substantially tubular outer member (200) having a first end (201) and a second end (202) and an outer wall formed into at least one flexible corrugated section (203, 204, 205) between said first and second ends and a substantially tubular inner member (206) extending along a length of said tubular outer member (200) between said first and second ends (201, 202), said inner member (206) defining a channel extending between said first and second ends (201, 202), said inner member (206) extending along said corrugated section (203, 204, 205) of said outer member (200), said tube characterised in that:
said substantially tubular inner member (206) comprises a tubular wall fashioned from flexible metal mesh braid having a smooth internal surface; and
said flexible corrugated section (203, 204, 205) in said outer member (200) is designed to absorb vibrations and thermal expansion and/or to provide for fitment of said tube to an engine which can overcome build inaccuracies of said engine; and
said outer member further comprising means (210) for regulating a cross-sectional area of said channel by restricting an internal cross-sectional area of said inner member, wherein gases passing through said channel maintain a substantially laminar flow.

Preferably, said substantially tubular inner member (206) extends substantially only over one or more of said at least one corrugated sections (203, 204, 205).

Preferably, said substantially tubular inner member (206) extends substantially the whole length of said first substantially tubular outer member (200).

Preferably, said substantially tubular inner member (206) provides for a substantially complete coverage over said length of said substantially tubular outer member (200), providing for a minimal gas leak pathway out of said channel defined by said substantially tubular inner member (206).

Preferably, said substantially tubular outer member (200) is manufactured from metal with a wall thickness in the range 0.2 mm to 0.4 mm.

Preferably, at least one of said first and/or second ends (201, 202) includes a flange with a plurality of apertures for attachment to said engine by fastening means, thus forming a gas-proof seal using a gasket.

Preferably, said means for regulating a cross-sectional area (210) comprises at least one deformation in said first substantially tubular outer member (200).

Preferably, said tube is configured to withstand temperatures in the region of 300°C to 700°C.

Preferably, said charged gas duct is configured for use in transferring gas compressed by a turbo-charger or super-charger to a combustion chamber via an inlet manifold.

Preferably, said means for regulating a cross-sectional area (210) comprises one or more deformations in said outer wall, the internal surface of said outer wall being engageable with said flexible metal mesh braid to control the cross-sectional area of said tubular inner member (206), control of said cross-sectional area optimising laminar gas flow through said tube providing a high performance gas flow output at said second end (202).

Preferably, engagement of said internal surface of said outer wall in the region of said deformation restricts the cross-sectional area of said inner member in the region adjacent said deformation in a direction towards both said first and second ends (201, 202).

Preferably, there is provided an internal combustion engine having a gas compression system wherein said gas compression system includes a charged gas duct comprising a tube as described above.

There is provided a method of manufacture of a charged gas duct of the first aspect of the present invention, said method characterised by:
forming said substantially tubular outer member (200);
locating said inner member (206) in said outer member (200), said inner member (206) located between first (201) and second (202) ends of said outer member (200) such that said inner member (206) extends along a main length of said outer member (200), internally of said outer member (200);
fixing a first end of said inner member (206) internally to said outer member (200) between said first (201) and second (202) ends of said outer member (200);
fixing a second end of said inner member (206) in the region of said second end (202) of said outer member (200), internally to said outer member (200).

Preferably, said method further comprises the step of:
fixedly attaching said second substantially tubular inner member (206) to a spacer member placed between said substantially tubular outer member (200) and said substantially tubular inner member (206).

Preferably, said method further comprises the steps of:
fastening said substantially tubular outer member (200), housing said substantially tubular inner member (206), to an internal combustion engine by means of a flange provided at said second end (202) of said outer member (200); and
forming a gas-proof seal between said flange and said engine by using a gasket.

Preferably, said method further comprises the step of:
adjusting a means for regulating the cross-sectional area of said second substantially tubular inner member (206), to adjust an internal dimension of said channel.

There is provided a method of supplying pressurized gases for combustion in an internal combustion engine having a gas compression system, said gases transferred from said gas compression system to said internal combustion engine via a tube extending there between, said tube according to the first aspect of a the present invention, said method comprising:
introducing said gases to a first end (201) of said tube at a pressure above atmospheric pressure;
passing said gases through said channel of said tube towards said internal combustion engine;
wherein said channel has a first cross-sectional area at a first end (201) of said channel, and a second cross-sectional area at a second end (202) of said channel, said second cross-sectional area being smaller than said first cross-sectional area, such that said gases passing through said channel maintain a substantially laminar flow.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates a first type of prior art charged air duct having a tubular duct passage of decreasing internal dimension connected by flexible rubber couplings to an inlet manifold of an internal combustion engine and an outlet manifold of a charging device;
Fig. 2 illustrates schematically a charged air duct according to a specific embodiment of the present invention in a view looking down at the first end 201 and second end 202 of the charged air duct;
Fig. 3 shows a side-on view with cut-away sections revealing the path of the inner member and location of seam welds of the inner member to the outer member; and
Fig. 4 shows a flow diagram illustrating the steps involved in assembly of the charged air duct of the present invention.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

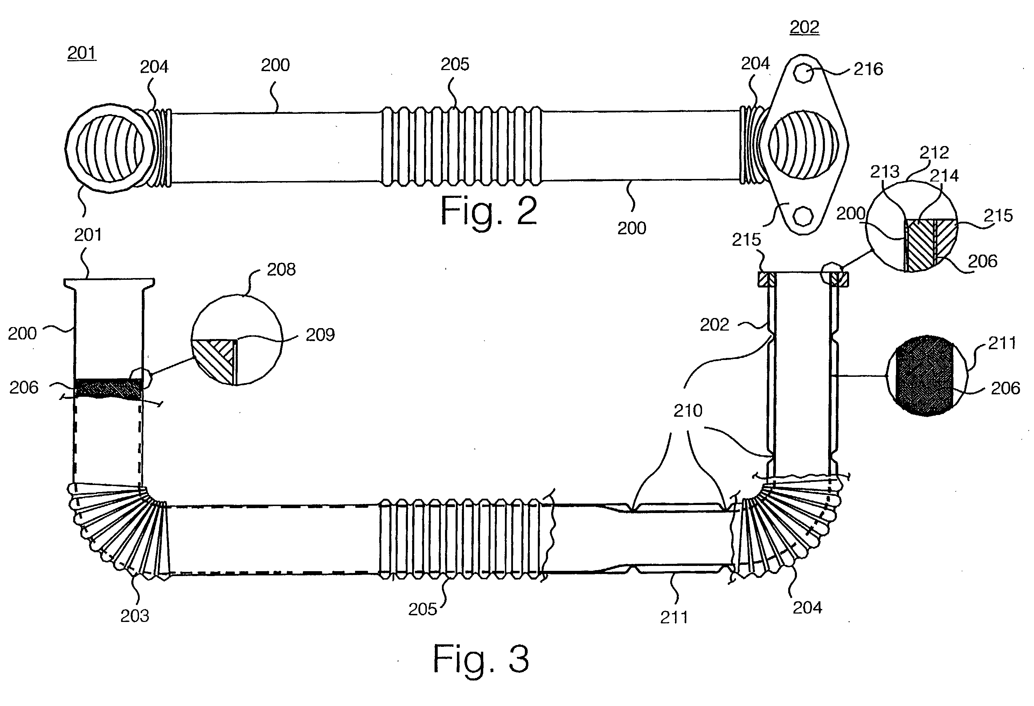

Fig. 2 and 3 illustrate a tubular charged gas duct according to a first specific embodiment of the present invention, suitable for use for transfer of pressurized gas such as air, from a gas compression system, to an inlet manifold on an engine block of an internal combustion engine. The charged gas duct comprises a first substantially tubular outer member 200 having a first end 201 and a second end 202 said tubular outer member being hollow throughout a path length being defined between said first and second ends. Said first tubular outer member has a plurality of corrugated portions 203, 204, 205 including a first corrugated portion 203 at a first bend region in said outer member, a second corrugated portion 204 at a second bend region, and a third corrugated portion 205 at a straight central section of the tubular outer member. These corrugated portions provide for absorption of vibrations transmitted from an associated internal combustion engine to which the duct is designed to be connected to, and to further provide for thermal expansion. The flexibility of the tube makes assembly of the tube to an engine easier and compensates for build inaccuracies in the engine.

Preferably, the outer tubular member 200 is manufactured as a single tube, having a wall thickness in the range 0.2 mm to 0.4 mm, from metal alloy material, providing a gas tight channel between first end 201 and second end 202.

First end 201 is connected in operation to an outlet manifold of the gas compression system. Fig. 2 shows a formed end eliminating the need for a rubber hose. Alternatively, a flange portion may be provided at first end 201 having apertures providing for insertion of screw fastening means to fasten said first end to an outlet manifold of the gas compression system to form a mechanically reliable seal using a suitable gasket inserted between the flange of the first end 201 and said outlet manifold.

In use first end 201 is more commonly exposed to higher temperatures than the second end 202, as the first end 201 is closer to the combustion chamber of the internal combustion engine. The second end 202 preferably does not make use of a rubber hose connector but preferably has a flange connector plate 214 having apertures 215 for insertion of fastening means to fasten the second end 202 of the charged air duct. A fastening means such as screw fastening means provides for a mechanically reliable seal. Further, a gas proof seal may be provided for by insertion of a gasket between flange portion 214 and the inlet manifold.

Although the corrugated portions provide for a pathway for transfer of charged gas between an outlet of the gas compression system and the first end 201 of the duct to the combustion chamber of the internal combustion engine via the inlet manifold and second end 202, a flow of gas directly over the corrugated portions 203, 204 and 205 is not ideal because the corrugations would disturb the flow of air within the channel. This would result in a gas pressure drop in the duct and hence a loss in performance of the engine. To solve this problem a second tubular inner member 206 is inserted as a liner into the outer member. In the first specific embodiment of the present invention said second tubular inner member 206 is manufactured from a tubular wall of flexible fine interleaved metal mesh braid having a smooth internal surface. The metal mesh braid has a spun wire surface manufactured to be a high coverage metallic braid. Over a length in which the inner braid member is inserted in and overlaps the outer member, the braid member provides coverage of the tubular wall of said second inner member, and in particular the corrugated portions of the wall. This provides for a minimal flow disruption pathway. The second tubular member is inserted into said first outer tubular member during manufacture through first end 201. The second inner member is pushed through the first outer member until a second end of the second inner member locates with the second end 202 of the first outer member. This region is shown in the magnified portion 212 of Fig. 3. The metal mesh braid forming second inner member 206 is spaced away from the tubular wall of said first outer member by a spacer member 214. The spacer member may be a metal ring inserted at second end 202 to appropriately space the second inner member 206 from first outer member 200 so that a second internal cross-sectional area of the channel at the second end is less than a first internal cross-sectional area of the channel at the first end. The second outer member 206 is secured in position by a seam weld 213 to spacer member 214. The seam weld may thus extend through a circle firmly connecting metallic braid of second inner member 206 to said spacer member 214. Not only does this serve to fix second inner member 206 to spacer member 214 and therefore fixing second inner member firmly in position, it prevents fraying at the edges and ends of the metal braid forming second inner member 206.

Metallic mesh braid forming said second inner member 206 is shown in magnification in portion 211. The second inner member thus provides a smooth internal surface to the channel, over which gases may be transferred between first end 201 and second end 202 and thereby between an outlet manifold of the gas compression system and an inlet manifold on an internal combustion engine. A smooth gas flow is maintained through all corrugated portions and through all bend portions of said first outer member, by virtue of the inner tubular liner member 206.

Second inner member 206 is securely fixed to said first outer member 203 at a point either at or adjacent to the first end 201. Magnified portion 208 in Fig. 3 shows a seam weld 209 fixing second inner member 206 in position. The seam weld may extend circularly attaching the second inner member 206 to the first outer member 203 at all points in a plane of said first substantially tubular outer member. This seam weld locates said second inner member in position and prevents the metal braid forming said second inner member from fraying. The precise position of fixing the second inner member to the first outer member may vary. This is because the cross-sectional area of the charged air duct through which charged air may flow at a position near the first end 201 is required to be as large as possible. The inner member 206 is manufactured from metal braid with a diameter suitable to fill the diameter of a first outer member. At a position near first end 201 a relatively large cross-sectional area for charged gas flow is required hence inner member 206 is allowed to expand fully into the tubular wall of outer member 200. As a large cross-sectional area is required inner member 206 may be fixed in position either at first end 201 or at a position further within said first outer member, but at a position nearer said first end and said second end.

In the embodiment shown, the diameter of said first outer member is generally in the region 50 mm, although this diameter may vary according to the specific application and requirements for the particular gas compression system. Said first outer member is manufactured as a thin walled metal tube, having wall thickness in the region 0.2 mm to 0.4 mm, and typically 0.3 mm. Corrugations at the bend portions 203, 204 and within the straight portion 205 provide for rigidity and strength of said first outer member, and eases assembly of the tube to the engine, the flexibility countering build inaccuracies.

Experimental tests have shown that improvements to the performance of internal combustion engines can be made using gas compression systems where charged air ducts utilize a change in the cross-sectional area available for flow of charged gases. Performance is enhanced by reducing the cross-sectional area towards a second end of the charged air duct. In the first specific embodiment of the present invention a reduction in the cross-sectional area of the second substantially tubular inner liner member 206 which provides a pathway for charged air flow is provided by one or a plurality of deformations in said first substantially tubular outer member. These deformations may be at any point between said first end 201 and second end 202. However, a larger number of deformations 209 are placed towards second end 202, where a significant reduction in cross-sectional area of the internal channel is required. Deformations 210 may be in the form of circular indentations each extending around the circumference of said first outer member each in a corresponding respective plane which is normal to a main central axis of the outer member, at the relevant place along the outer member. Each deformation deflects inwards to the central passage of the duct, spacing apart the flexible metal mesh braid wall forming said second substantially tubular inner member from the inner tubular surface of said first outer member. By utilizing a plurality of deformations 210 a decreased cross-sectional area of said second inner liner member may be produced, maintained and if necessary adjusted towards the second end 202 of the charged air duct. Although in manufacture, deformations 210 may be placed at specific positions and each being formed from circular indentations into said first outer member of specific depth, each deformation may be of a different specific depth extending towards the central axis of the outer member.

Where said deformations are to a pre-defined required specification, it may be that on operation of said charged air duct in transfer of charged gases between a gas compression system and an internal combustion engine there is resonance and hence noise and vibration. Although such a noise may be unwanted it is not necessarily damaging however, vibration produced through resonance may damage the charged air duct or may loosen the charged air duct from the internal combustion engine as an unwanted side effect. However, the first embodiment charged air duct provides for the ability to adjust the depth of individual deformations 210. Hence if undesired vibration or noise is encountered, the duct may be de-tuned from resonance whilst in design stage for a particular engine. De-tuning of the duct is implemented by modifying the extent and length of the corrugated portions of the duct 203, 204, 205.

In the first specific embodiment a charged air duct comprises tubular members manufactured substantially from a thin walled metal tubular outer member and tubular metallic mesh braid inner member. Hence, the use of rubber connectors, for example to facilitate bend portions is not required. This means that the charged air duct may withstand engine temperatures which may reach the region of 500 to 700°C.

When the charged air duct is attached to an outlet manifold of the gas compression system and to an inlet manifold on an internal combustion engine compressed gas (charged gas) exits the outlet manifold and enters the first end 201 of the charged air duct. A volume of the compressed gas flowing through the duct initially occupies a maximum cross-sectional area of either the first substantially tubular outer member or the second substantially tubular inner liner member which is adjacent to the tubular wall of the first outer member. In the former case compressed gas passes along the charged air duct to enter a region where the inner member 206 is lying adjacent to the outer member 200. Charged gas moves through the charged air duct in a direction between the first end 201 and the second end 202, being propelled by further compressed gas being supplied into first end 201. Charged gas passes through corrugated bend portions 203, 204, 205, without significant disturbance to gas flow. Gas flow is further maintained as a laminar flow without disruption through corrugated portions in the straight section of the channel. Hence, laminar flow is maintained throughout the channel. Where deformations 210 have been formed in said outer member the cross-sectional area available for gas flow to said inner member is decreased. Said inner member 206 is manufactured from a high coverage metal mesh braid with a minimal gas leak pathway, hence any gap produced between inner member 206 and outer member 200 eg gap 211 will not become filled with a high pressure gas. In contrast, due to there being a minimal gas leak pathway only a low pressure gas will exist in such region. The cross-sectional area of inner member 206 may further decrease depending on the exact extent to which deformations 210 have been made. Hence gas entering inlet manifold via second end 202 will be occupying a region of the channel of decreased diameter and cross-sectional area compared to the cross-sectional area and diameter of the tube channel at first end 201. Further, gas flow entering inlet manifold via second end 202 will in general be laminar.

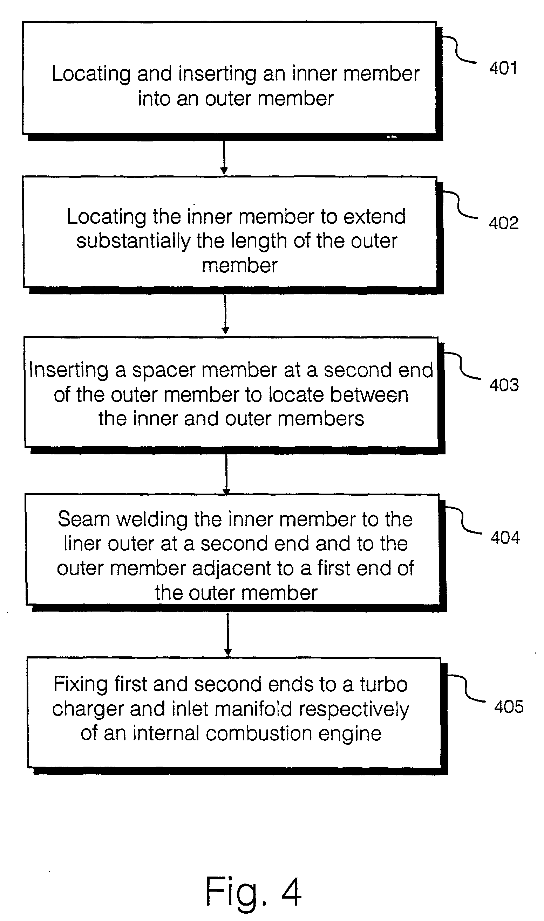

Fig. 4 illustrates steps for manufacture of a charged air duct according to a first specific method of the present invention. This method relates to the manufacture of the charged air duct illustrated in Figs. 2 and 3. Initially, outer member 200 is fabricated from tubular metal alloy by known methods, in a first step. A second step 401 involves insertion of a flexible metal mesh braid tube into the outer metal member having thin wall thickness in the region 0.3 mm. A third step, 402 comprises the location of said metal mesh braid forming the inner tubular liner member within said outer member such that a second end of said inner member is located with a second end of said outer member, both second ends being flush together. A fourth step 403 involves an insertion of the spacer member 214 to appropriately space said inner member from said outer member at said second end 202. Said spacer member may comprise a circular metal ring of uniform thickness throughout. This acts to space inner member 206 from outer member 200 to give a diameter of the inner member and cross-sectional area of the channel equal or less than that provided by the nearest adjacent deformation 210 in outer member 200. It may be that deformations 210 are made in outer member 200 following insertion of said spacer member 214. In this case the spacer member is of sufficient thickness to make the cross-sectional area and diameter of inner member 206 for gas flow and second end 202 equal or less than the proposed cross-sectional area and diameter at the nearest adjacent deformation 210 which is to be formed. Following insertion of the spacer member seam welds are formed to fix said inner member 206 at second end 202 to said spacer member 214 and fix said inner member 206 to said outer member 200 at a region adjacent to or at first end 201. This acts to fix inner member 206 in position and to prevent the first and second ends of inner member 206 from metal mesh braid from splitting and fraying. This step is encompassed in step 404. Following this step it may be desirable to make deformations in outer member 200 if deformations 210 have not already been made.

When the substantially tubular inner member manufactured from metal braid has been securely fixed in position within the substantially tubular outer member and appropriate deformations have been made in the outer member to result in the decrease in cross-sectional area of the tubular channel for charge gas flow towards the second end of the charged air duct, said first and second ends may be fixed to a gas compression system eg turbocharger and inlet manifold on an engine block on an internal combustion engine respectively, in step 405.

The present embodiment thus provides for a single piece component being simple to manufacture at a low cost and easily modified before installation without the need to employ a major re-tool of manufacturing machines to produce an alternative design. The use of an entirely metal single piece component further provides for compatibility with increasing engine temperatures with thermal expansion being accommodated by corrugated portions in the outer member.

## Claims

1. A charged gas duct for an internal combustion engine comprising a tube, said tube comprising a substantially tubular outer member (200) having a first end (201) and a second end (202) and an outer wall formed into at least one flexible corrugated section (203, 204, 205) between said first and second ends and a substantially tubular inner member (206) extending along a length of said tubular outer member (200) between said first and second ends (201, 202), said inner member (206) defining a channel extending between said first and second ends (201, 202), said inner member (206) extending along said corrugated section (203, 204, 205) of said outer member (200), said tube **characterised in that**:
said substantially tubular inner member (206) comprises a tubular wall fashioned from flexible metal mesh braid having a smooth internal surface; and
said flexible corrugated section (203, 204, 205) in said outer member (200) is designed to absorb vibrations and thermal expansion and/or to provide for fitment of said tube to an engine which can overcome build inaccuracies of said engine; and
said outer member further (200) comprising means (210) for regulating a cross-sectional area of said channel by restricting an internal cross-sectional area of said inner member (206), wherein gases passing through said channel maintain a substantially laminar flow.

2. A charged gas duct for an internal combustion engine, comprising a tube, as claimed in claim 1, wherein said substantially tubular inner member (206) extends substantially only over one or more of said at least one corrugated sections (203, 204, 205).

3. A charged gas duct for an internal combustion engine, comprising a tube, as claimed in any of claims 1 or 2, wherein said substantially tubular inner member (206) extends substantially the whole length of said first substantially tubular outer member (200).

4. A charged gas duct for an internal combustion engine, comprising a tube, as claimed in any of claims 1 to 3, wherein said substantially tubular inner member (206) provides for a substantially complete coverage over said length of said substantially tubular outer member (200), providing for a minimal gas leak pathway out of said channel defined by said substantially tubular inner member (206).

5. A charged gas duct for an internal combustion engine, comprising a tube, as claimed in any previous claim wherein said substantially tubular outer member (200) is manufactured from metal with a wall thickness in the range 0.2 mm to 0.4 mm.

6. A charged gas duct for an internal combustion engine, comprising a tube, as claimed in claim 5, wherein at least one of said first and/or second ends (201, 202) includes a flange with a plurality of apertures for attachment to said engine by fastening means, thus forming a gas-proof seal using a gasket.

7. A charged gas duct for an internal combustion engine, comprising a tube, as claimed in any previous claim wherein said means for regulating a cross-sectional area (210) comprises at least one deformation in said first substantially tubular outer member (200).

8. A charged gas duct for an internal combustion engine, comprising a tube, as claimed in any of claims 1 to 7, configured to withstand temperatures in the region of 300°C to 700°C.

9. A charged gas duct as claimed in any one of claims 1 to 8, configured for use in transferring gas compressed by a turbo-charger or super-charger to a combustion chamber via an inlet manifold.

10. A charged gas duct for an internal combustion engine, comprising a tube, as claimed in any of claims 1 to 6, 8 or 9 wherein said means for regulating a cross-sectional area (210) comprises one or more deformations in said outer wall, the internal surface of said outer wall being engageable with said flexible metal mesh braid to control the cross-sectional area of said tubular inner member (206), control of said cross-sectional area optimising laminar gas flow through said tube providing a high performance gas flow output at said second end (202).

11. A charged gas duct for an internal combustion engine, comprising a tube, as claimed in claim 10, wherein engagement of said internal surface of said outer wall in the region of said deformation restricts the cross-sectional area of said inner member in the region adjacent said deformation in a direction towards both said first and second ends (201, 202).

12. An internal combustion engine having a gas compression system wherein said gas compression system includes a charged gas duct comprising a tube as claimed in any of claims 1 to 11.

13. A method of manufacture of a charged gas duct as claimed in any of claims 1 to 11, said method **characterised by**:
forming said substantially tubular outer member (200);
locating said inner member (206) in said outer member (200), said inner member (206) located between first (201) and second (202) ends of said outer member (200) such that said inner member (206) extends along a main length of said outer member (200), internally of said outer member (200);
fixing a first end of said inner member (206) internally to said outer member (200) between said first (201) and second (202) ends of said outer member (200);
fixing a second end of said inner member (206) in the region of said second end (202) of said outer member (200), internally to said outer member (200).

14. The method claimed in claim 13, further comprising the step of:
fixedly attaching said second substantially tubular inner member (206) to a spacer member placed between said substantially tubular outer member (200) and said substantially tubular inner member (206).

15. The method as claimed in claim 13 or 14, further comprising the steps of:
fastening said substantially tubular outer member (200), housing said substantially tubular inner member (206), to an internal combustion engine by means of a flange provided at said second end (202) of said outer member (200); and
forming a gas-proof seal between said flange and said engine by using a gasket.

16. The method as claimed in any of claims 13 to 15, further comprising the step of:
adjusting the means (210) for regulating the cross-sectional area of said second substantially tubular inner member (206), to adjust an internal dimension of said channel.

17. A method of supplying pressurized gases for combustion in an internal combustion engine having a gas compression system, said gases transferred from said gas compression system to said internal combustion engine via a charged gas duct extending there between, said charged gas duct as claimed in any of claims 1 to 11, said method comprising:
introducing said gases to a first end (201) of said charged gas duct at a pressure above atmospheric pressure;
passing said gases through said channel of said charged gas duct towards said internal combustion engine;
wherein said channel has a first cross-sectional area at a first end (201) of said channel, and a second cross-sectional area at a second end (202) of said channel, said second cross-sectional area being smaller than said first cross-sectional area, such that said gases passing through said channel maintain a substantially laminar flow.

## Patentansprüche

1. Einen Ladegaskanal für einen Verbrennungsmotor, bestehend aus einem Rohr, wobei das besagte Rohr ein im wesentlichen rohrförmiges Außenelement (200) umfaßt, das ein erstes Ende (201) und ein zweites Ende (202) und eine Außenwand aufweist, die zu zumindest einem flexiblen, gewellten Abschnitt (203, 204, 205) zwischen dem besagten ersten und zweiten Ende und einem im wesentlichen rohrförmigen Innenelement (206) geformt ist, das sich entlang einer Länge des besagten rohrförmigen Außenelements (200) zwischen dem besagten ersten und zweiten Ende (201, 202) des besagten Innenelements (206) erstreckt und einen Kanal abgrenzt, der sich zwischen dem besagten ersten und zweiten Ende (201, 202) erstreckt, wobei sich das besagte Innenelement (206) entlang dem besagten gewellten Abschnitt (203, 204, 205) des besagten Außenelements (200) erstreckt und das besagte Rohr **dadurch gekennzeichnet ist, daß**:
das besagte, im wesentlichen rohrförmige Innenelement (206) eine rohrförmige Wand umfaßt, die aus flexiblem Metallmaschengeflecht mit glatter Innenfläche geformt ist, und
der besagte gewellte Abschnitt (203, 204, 205) in dem besagten Außenelement (200) konzipiert ist, um Schwingungen zu dämpfen und Wärmedehnung aufzunehmen und/oder die Anbringung des besagten Rohrs an einem Motor vorzusehen, wodurch Ungenauigkeiten im Bau des besagten Motors überwunden werden können, und
das besagte Außenelement (200) weiterhin eine Vorrichtung (210) zum Regulieren einer Querschnittfläche des besagten Kanals durch Begrenzung einer inneren Querschnittfläche des besagten Innenelements (206) umfaßt, worin durch den besagten Kanal strömende Gase eine im wesentlichen laminare Strömung aufrechterhalten.

2. Einen Ladegaskanal für einen Verbrennungsmotor, bestehend aus einem Rohr nach Anspruch 1, worin sich das besagte, im wesentlichen rohrförmige Innenelement (206) im wesentlichen nur über einen oder mehrere der besagten, zumindest einen gewellten Abschnitte (203, 204, 205) erstreckt.

3. Einen Ladegaskanal für einen Verbrennungsmotor, bestehend aus einem Rohr nach einem der Ansprüche 1 oder 2, worin sich das besagte, im wesentlichen rohrförmige Innenelement (206) im wesentlichen über die gesamte Länge des besagten ersten, im wesentlichen rohrförmigen Außenelements (200) erstreckt.

4. Einen Ladegaskanal für einen Verbrennungsmotor, bestehend aus einem Rohr nach einem der Ansprüche 1 bis 3, worin das besagte, im wesentlichen rohrförmige Innenelement (206) eine im wesentliche vollständige Deckung über die besagte Länge des besagten, im wesentlichen rohrförmigen Außenelements (200) und einen minimalen Gasleckweg aus dem besagten Kanal heraus vorsieht, der durch das besagte, im wesentlichen rohrförmige Innenelement (206) abgegrenzt ist.

5. Einen Ladegaskanal für einen Verbrennungsmotor, bestehend aus einem Rohr nach einem der vorhergehenden Ansprüche, worin das besagte, im wesentlichen rohrförmige Außenelement (200) aus Metall mit einer Wandstärke im Bereich von 0,2 bis 0,4 mm hergestellt ist.

6. Einen Ladegaskanal für einen Verbrennungsmotor, bestehend aus einem Rohr nach Anspruch 5, worin zumindest eines der besagten ersten und/oder zweiten Enden (201, 202) einen Flansch mit einer Vielzahl von Öffnungen zur Befestigung an dem besagten Motor durch Befestigungsmittel einbezieht, wodurch unter Benutzung eines Dichtrings eine gasdichte Abdichtung gebildet wird.

7. Einen Ladegaskanal für einen Verbrennungsmotor, bestehend aus einem Rohr nach einem der vorhergehenden Ansprüche, worin die besagte Vorrichtung zum Regulieren der Querschnittfläche (210) mindestens eine Verformung in dem besagten ersten, im wesentlichen rohrförmigen Außenelement (200) umfaßt.

8. Einen Ladegaskanal für einen Verbrennungsmotor, bestehend aus einem Rohr nach einem der Ansprüche 1 bis 7, der konfiguriert ist, um Temperaturen im Bereich von 300 bis 700 °C standzuhalten.

9. Einen Ladegaskanal nach einem der Ansprüche 1 bis 8, der für Benutzung beim Überleiten von durch einen Turbolader oder Vorverdichter verdichtetem Gas zu einer Verbrennungskammer über einen Ansaugkrümmer konfiguriert ist.

10. Einen Ladegaskanal nach einem der Ansprüche 1 bis 6, 8 oder 9, worin die besagte Vorrichtung zum Regulieren der Querschnittfläche (210) eine oder mehrere Deformationen in der besagten Außenwand umfaßt, und wobei die Innenfläche der besagten Außenwand mit dem besagten flexiblen Metallmaschengeflecht einrückbar ist, um die Querschnittfläche des besagten rohrförmigen Innenelements (206) zu kontrollieren, und wobei die Kontrolle der besagten Querschnittfläche die laminare Gasströmung durch das besagte Rohr optimiert und eine Hochleistungs-Gasströmungsmenge am besagten zweiten Ende (202) bereitstellt.

11. Einen Ladegaskanal für einen Verbrennungsmotor, bestehend aus einem Rohr nach Anspruch 10, worin die Einrückung der besagten Innenfläche der besagten Außenwand im Bereich der besagten Deformation die Querschnittfläche des besagten Innenelements im Bereich neben der besagten Deformation in einer Richtung sowohl zum ersten als auch zweiten Ende (201, 202) hingehend begrenzt.

12. Einen Verbrennungsmotor mit einem Gasverdichtungssystem, worin das besagte Gasverdichtungssystem einen Ladegaskanal, bestehend aus einem Rohr nach einem der Ansprüche 1 bis 11, einbezieht.

13. Ein Verfahren zur Herstellung eines Ladegaskanals nach einem der Ansprüche 1 bis 11, wobei das besagte Verfahren durch folgendes **gekennzeichnet** ist:
Formung des besagten, im wesentlichen rohrförmigen Außenelements (200);
Positionierung des besagten Innenelements (206) in dem besagten Außenelement (200), wobei das besagte Innenelement (206) so zwischen dem ersten (201) und zweiten (202) Ende des besagten Außenelements (200) angeordnet ist, daß sich das besagte Innenelement (206) entlang einer Hauptlänge des besagten Außenelements (200) - innerhalb des besagten Außenelements (200) - erstreckt;
Fixierung eines ersten Endes des besagten Innenelements (206) innerhalb des besagten Außenelements (200) zwischen dem besagten ersten (201) und zweiten (202) Ende des besagten Außenelements (200);
Fixierung eines zweiten Endes des besagten Innenelements (206) im Bereich des besagten zweiten Endes (202) des besagten Außenelements (200) innerhalb des besagten Außenelements (200).

14. Das Verfahren nach Anspruch 13, das weiterhin den folgenden Arbeitsschritt umfaßt:
sichere Befestigung des besagten, im wesentlichen rohrförmigen Innenelements (206) an einem zwischen dem besagten, im wesentlichen rohrförmigen Außenelement (200) und dem besagten, im wesentlichen rohrförmigen Innenelement (206) positionierten Abstandelement.

15. Das Verfahren nach Anspruch 13 oder 14, das weiterhin die folgenden Arbeitsschritte umfaßt:
Befestigung des besagten, im wesentlichen rohrförmigen Außenelements (200), in dem das besagte, im wesentlichen rohrförmige Innenelement (206) untergebracht ist, an einem Verbrennungsmotor mittels eines Flansches, der an dem besagten zweiten Ende (202) des besagten Außenelements (200) vorgesehen ist, und
Bildung einer gasdichten Abdichtung zwischen dem besagten Flansch und dem besagten Motor durch Benutzung eines Dichtrings.

16. Das Verfahren nach einem der Ansprüche 13 bis 15, das weiterhin den folgenden Arbeitsschritt umfaßt:
Einstellung der Vorrichtung (210) zum Regulieren der Querschnittfläche des besagten zweiten, im wesentlichen rohrförmigen Innenelements (206), um eine Innenabmessung des besagten Kanals anzupassen.

17. Ein Verfahren zur Zuführung von Druckgasen zur Verbrennung in einem Verbrennungsmotor, der mit einem Gasverdichtungssystem ausgestattet ist, wobei die besagten Gase von dem besagten Gasverdichtungssystem zu dem besagten Verbrennungsmotor über einen sich dazwischen erstreckenden Ladegaskanal übergeleitet werden, und wobei der besagte Ladegaskanal einem der Ansprüche 1 bis 11 entspricht und das besagte Verfahren folgendes umfaßt:
Einleitung der besagten Gase zu einem ersten Ende (201) des besagten Ladegaskanals mit einem über atmosphärischen Druck liegenden Druck;
Durchleitung der besagten Gase durch den besagten Kanal des besagten Ladegaskanals zum besagten Verbrennungsmotor;
worin der besagte Kanal eine Querschnittfläche an einem ersten Ende (201) des besagten Kanals, und eine zweite Querschnittfläche an einem zweiten Ende (202) des besagten Kanals aufweist, und wobei die zweite Querschnittfläche kleiner ist als die besagte erste Querschnittfläche, dergestalt, daß die besagten, durch den besagten Kanal hindurchströmenden Gase eine im wesentlichen laminare Strömung aufrechterhalten.

## Revendications

1. Tuyauterie chargée de gaz pour un moteur à combustion interne comprenant un tube, ledit tube comprenant un élément externe essentiellement tubulaire (200) possédant une première extrémité (201) et une deuxième extrémité (202) ainsi qu'une paroi externe formée en une section spiralée flexible (203, 204, 205) au moins entre lesdites première et deuxième extrémités et un élément interne essentiellement tubulaire (206) s'étendant sur une certaine distance le long dudit élément externe tubulaire (200) entre lesdites première et deuxième extrémités (201, 202), ledit élément interne (206) définissant un conduit entre lesdites première et deuxième extrémités (201, 202), ledit élément interne (206) s'étendant le long de ladite section spiralée (203, 204, 205) dudit élément externe (200), ledit tube se caractérisant en ce que :
ledit élément interne essentiellement tubulaire (206) comprend une paroi tubulaire façonnée à partir d'une tresse flexible à mailles métalliques possédant une surface interne lisse ; et
ladite section spiralée flexible (203, 204, 205) dans ledit élément externe (200) est conçue de manière à absorber les vibrations et l'expansion thermique et/ou à servir de dispositif permettant de monter ledit tube sur un moteur, capable de surmonter les imprécisions de construction dudit moteur ; et
ledit élément externe (200) comprenant en outre un moyen (210) permettant de réguler une coupe transversale dudit conduit, en limitant une coupe transversale interne dudit élément interne (206), cas dans lequel les gaz passant à travers ledit conduit conservent un flux essentiellement laminaire.

2. Tuyauterie chargée de gaz pour un moteur à combustion interne comprenant un tube, selon la revendication 1, dans laquelle ledit élément interne essentiellement tubulaire (206) ne s'étend principalement que sur une ou plusieurs de l'une au moins desdites sections spiralées (203, 204, 205).

3. Tuyauterie chargée de gaz pour un moteur à combustion interne comprenant un tube, selon l'une quelconque des revendications 1 ou 2, dans laquelle ledit élément interne essentiellement tubulaire (206) s'étend principalement sur toute la longueur dudit élément externe essentiellement tubulaire (200).

4. Tuyauterie chargée de gaz pour un moteur à combustion interne comprenant un tube, selon l'une quelconque des revendications 1 à 3, dans laquelle ledit élément interne essentiellement tubulaire (206) assure une couverture sensiblement complète sur ladite longueur dudit élément externe essentiellement tubulaire (200), constituant ainsi un passage de fuite de gaz minimal sortant dudit conduit qui est défini par ledit élément interne essentiellement tubulaire (206).

5. Tuyauterie chargée de gaz pour un moteur à combustion interne comprenant un tube, selon l'une quelconque des revendications précédentes, dans laquelle ledit élément externe essentiellement tubulaire (200) est fabriqué en métal avec une épaisseur de paroi se situant dans une fourchette comprise entre 0,2 et 0,4 mm.

6. Tuyauterie chargée de gaz pour un moteur à combustion interne comprenant un tube, selon la revendication 5, dans laquelle l'une au moins desdites première et/ou deuxième extrémités (201, 202) comporte une bride avec une pluralité d'ouvertures en vue d'un montage sur ledit moteur grâce à des moyens de fixation, formant ainsi une étanchéité au gaz à l'aide d'un joint.

7. Tuyauterie chargée de gaz pour un moteur à combustion interne comprenant un tube, selon l'une quelconque des revendications précédentes, dans laquelle ledit moyen destiné à réguler une coupe transversale (210) comprend au moins une déformation dans ledit élément externe essentiellement tubulaire (200).

8. Tuyauterie chargée de gaz pour un moteur à combustion interne comprenant un tube, selon l'une quelconque des revendications 1 à 7, configurée de façon à résister à des températures dans une plage se situant entre 300°C et 700°C.

9. Tuyauterie chargée de gaz, selon l'une quelconque des revendications 1 à 8, configurée de façon à pouvoir être utilisée pour transférer du gaz, qui a été comprimé par un turbocompresseur ou un superturbocompresseur, vers une chambre de combustion par l'intermédiaire d'un collecteur d'admission.

10. Tuyauterie chargée de gaz pour un moteur à combustion interne comprenant un tube, selon l'une quelconque des revendications 1 à 6, 8 ou 9, dans laquelle ledit moyen destiné à réguler une coupe transversale (210) comprend une ou plusieurs déformations dans ladite paroi externe, la surface interne de ladite paroi externe pouvant être engagée dans ladite tresse flexible à mailles métalliques en vue de contrôler la coupe transversale dudit élément interne tubulaire (206), le contrôle de ladite coupe transversale permettant d'optimaliser le flux de gaz laminaire à travers ledit tube et fournissant ainsi une sortie de flux de gaz de haute performance sur ladite deuxième extrémité (202).

11. Tuyauterie chargée de gaz pour un moteur à combustion interne comprenant un tube, selon la revendication 10, dans laquelle l'engagement de ladite surface interne de ladite paroi externe, dans la zone de ladite déformation, à pour effet de restreindre la coupe transversale dudit élément interne dans la zone adjacente à ladite déformation dans un sens allant à la fois vers la première et la deuxième extrémités (201, 202).

12. Moteur à combustion interne équipé d'un système de compression de gaz dans lequel ledit système de compression de gaz inclut une tuyauterie chargée de gaz comprenant un tube, selon l'une quelconque des revendications 1 à 11.

13. Procédé de fabrication d'une tuyauterie chargée de gaz, selon l'une quelconque des revendications 1 à 11, ledit procédé se caractérisant par :
la formation dudit élément externe essentiellement tubulaire (200) ;
le positionnement dudit élément interne (206) dans ledit élément externe (200), ledit élément interne (206) étant placé entre les première (201) et deuxième (202) extrémités dudit élément externe (200) de sorte que ledit élément interne (206) s'étend le long d'une longueur principale dudit élément externe (200), à l'intérieur dudit élément externe (200) ;
la fixation d'une première extrémité dudit élément interne (206) à l'intérieur dudit élément externe (200) entre lesdites première (201) et deuxième (202) extrémités dudit élément externe (200) ;
la fixation d'une deuxième extrémité dudit élément interne (206) dans la zone de ladite deuxième extrémité (202) dudit élément externe (200), à l'intérieur dudit élément externe (200).

14. Procédé, selon la revendication 13, comprenant en outre l'étape consistant à :
attacher de façon fixe ledit deuxième élément interne essentiellement tubulaire (206) sur un élément-entretoise placé entre ledit élément externe essentiellement tubulaire (200) et ledit élément interne essentiellement tubulaire (206).

15. Procédé, selon la revendication 13 ou 14, comprenant en outre les étapes consistant à :
assujettir ledit élément externe essentiellement tubulaire (200), abritant ledit élément interne essentiellement tubulaire (206) sur un moteur à combustion interne au moyen d'une bride prévue au niveau de ladite deuxième extrémité (202) dudit élément externe (200) ; et
former un joint étanche au gaz entre ladite bride et ledit moteur grâce à l'utilisation d'un joint.

16. Procédé, selon l'une quelconque des revendications 13 à 15, comprenant en outre l'étape consistant à :
ajuster le moyen (210) permettant de réguler la coupe transversale dudit deuxième élément interne essentiellement tubulaire (206), en vue d'ajuster la dimension interne dudit conduit.

17. Procédé permettant de fournir des gaz sous pression en vue de leur combustion dans un moteur à combustion interne équipé d'un système de compression des gaz, lesdits gaz ayant été transférés à partir dudit système de compression des gaz vers ledit moteur à combustion interne par l'intermédiaire d'une tuyauterie chargée de gaz s'étendant entre ces derniers, ladite tuyauterie chargée de gaz étant conforme à l'une quelconque des revendications 1 à 11, ledit procédé comprenant :
l'introduction desdits gaz sur une première extrémité (201) de ladite tuyauterie chargée de gaz, à une pression située au-delà de la pression atmosphérique ;
l'acheminement desdits gaz à travers ledit conduit de ladite tuyauterie chargée de gaz vers ledit moteur à combustion inteme ;
dans lequel ledit conduit possède une première coupe transversale sur une première extrémité (201) dudit conduit, et une deuxième coupe transversale sur une deuxième extrémité (202) dudit conduit, ladite deuxième coupe transversale étant plus petite que ladite première coupe transversale, de sorte que lesdits gaz traversant ledit conduit conservent un flux essentiellement laminaire.
